# EUROPEAN PATENT SPECIFICATION

(11) **EP 0 698 322 B1**
(45) Date of publication and mention of the grant of the patent: **31.10.2001**
(21) Application number: 94909142.5
(22) Date of filing: 14.03.1994
(51) Int. Cl.: H04L 12/28, H04L 12/56

(54) **METHOD FOR CONTROLLING CONDITIONAL CONNECTIONS IN A TELECOMMUNICATIONS SYSTEM**
VERFAHREN ZUR STEUERUNG BEDINGTER VERBINDUNGEN IN EINEM FERNMELDESYSTEM
PROCEDE DE GESTION DE RACCORDEMENTS CONDITIONNELS DANS UN SYSTEME DE TELECOMMUNICATION

(30) Priority: 16.03.1993 FI 931165
(43) Date of publication of application: 28.02.1996
(73) Proprietor: Nokia Networks Oy, 02150 Espoo (FI)
(72) Inventor: PELTOMÄKI, Arto, FIN-02710 Espoo (FI); HYYTIÄ, Simo, FIN-02940 Espoo (FI)
(74) Representative: Johansson, Folke Anders
(86) International application number: FI9400093
(87) International publication number: WO9422250

(56) References cited:
- EP-A- 0 453 876
- EP-A- 0 522 748
- EP-A- 0 563 511
- US-A- 5 103 447
- US-A- 5 151 902
- US-A- 5 172 376

## Description

The invention relates to a method according to the preamble of the appended claim 1 for controlling conditional connections in a telecommunications system.

In the existing plesiochronous transmission network conditional connections are often controlled by means of a pilot channel, which e.g. in the European 30-channel basic multiplex system (2048 kbit/s) specified in CCITT Recommendation G.704 is typically formed by the c-bit of the time slot TS16 used for channel associated signalling. (The eight bits of the time slot TS16 are reserved for two signalling channels so that both of the channels can use four bits, generally represented by references a, b, c, d. However, in many signalling systems the c-bit is not in use and can be freely used for other purposes.) Such a method, however, requires channel associated signalling. In the case of common channel signalling or channel associated signalling where the c-bit is already in use, the pilot channel used for controlling conditional connections must be formed from another free bit, whereby the pilot channel uses the effective capacity of the system.

A generally used method of the kind where the condition information is formed by one bit of a certain time slot does not, however, operate if a fault occurring in the network causes the condition bit that is used to be stuck in a fixed state. Such a fault may be, for instance, a short circuit in the equipment which causes the condition bit to be in a fixed "0" state (which is normally used as the value "true" for the condition bit).

The object of the present invention is to provide a method which enables conditional connections to be controlled without using the effective capacity of the network even in the above-described case, where a fault occurring in the network causes the condition bit to be stuck in a fixed state. This is achieved with a method according to the invention, which is characterized by what is disclosed in the characterizing part of the appended claim 1.

The basic idea of the invention is to use, as before, one bit (at a time) for transmitting the condition, but to indicate that the channel is operational by the use of a certain recurrent sequence of condition bits. Only one sequence corresponds thus to the condition "true" while the other sequences correspond to the condition "false".

According to a preferred embodiment of the invention two different sequences are used in such a manner that the sequence to be transmitted is changed at predetermined intervals (the interval is extremely long as compared with the time between two successive condition bits). This arrangement allows the control means at the node which transmits condition bits (in practice the software at the node) to operate in a satisfactory way, as they can change the sequences in the correct manner.

In the following the invention and its preferred embodiments will be described in greater detail with reference to the examples illustrated in the accompanying drawings, in which
Figure 1 illustrates the principle for controlling a conditional connection, said principle being known per se, and
Figure 2 illustrates a recurrent sequence sent according to the invention on the pilot channel and changed at predetermined intervals.

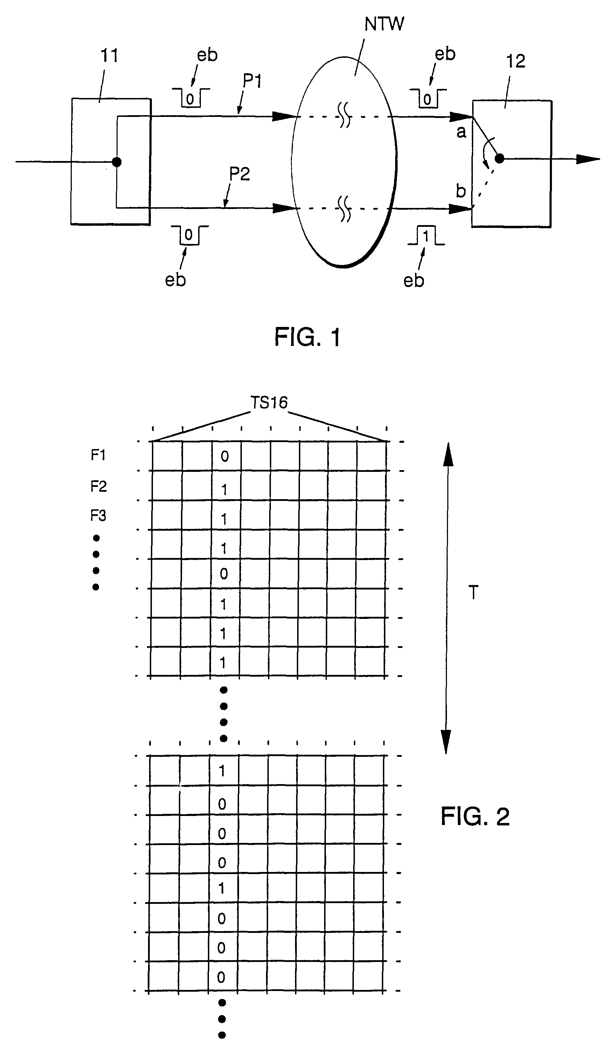

Figure 1 illustrates the principle for controlling a conditional connection. Node 11 transmits a signal via two different paths, indicated by P1 and P2. Node 12 (whose position in relation to node 11 is behind the network NTW comprising a plurality of nodes) at the far end must select whether it connects forward the signal received from gate a or the one received from gate b. For the selection, the signal contains, within a given time slot, a condition bit eb, which is examined by node 12 at the far end. The figure illustrates, by way of example, a situation where the condition bit eb transmitted by node 11 is set to the value "zero" ("true"), the condition bit received by node 12 from path P1 is also set to "zero", and the condition bit received by node 12 from path P2 is set to "one". As the change in the value of the condition bit on path P2 indicates a fault on the path, node 12 selects the signal from gate a. At node 12 the different signals (or the corresponding gates) can be provided with priorities which indicate which signal (gate) is to be selected if the condition bits received have the same values. If the signals (gates) have the same priority, it is also possible to select the signal in which the condition bit has longer had the same value.

According to the present invention, one bit is still used for transmitting the condition ("true"/"false"), but it is indicated that the channel is operational by means of a bit sequence of predetermined length, not a fixed "0" state. The bit sequence may be, for example, 4 bits in length, since the PDH equipment, for example, typically has buffers with the length of four frames. In practice, the sequence can be formed, for example, by generating bits according to the sequence to corresponding locations in the buffer by means of software. A sequence can be detected by examining the contents of the buffer at these locations. When the above-described c-bit, for example, is used for controlling a conditional connection, the solution according to the invention denotes that at the transmission end (e.g. node 12 in Figure 1) the c-bit forms a certain sequence - e.g. the sequence 0111 when the length used is 4 bits - which is repeated on the channel.

According to a preferred embodiment of the invention, the sequence can be changed to another at regular intervals T, e.g. at intervals of 1 to 3 seconds. Thus the condition bits transmitted on the pilot channel would alternately form (using the sequence of the example given above) the bit string ...011101110111... and e.g. the bit string ...100010001000..., in which all the bits of the first sequence (0111) are inverted. This embodiment is illustrated in Figure 2, which shows the eight bit positions of the time slot TS16 and the recurrent sequence formed by the c-bit. Successive frames have been indicated by references F1, F2, F3, etc.

For reasons of simplicity, the condition signal does not have a frame, but one zero or one in a sequence has a random position. The sequence should therefore be such that it is as easy as possible to observe when the sequence changes. Sequences 0011 and 1100, for example, are therefore not suitable to be used in accordance with the invention; the number of ones and zeros in the sequences used should be different.

The time between two successive condition bits, which in the example of Figure 2 corresponds to the time between two frames, may also vary depending on the level of the signal in which the condition information is inserted.

Although the invention has been described above with reference to the examples illustrated in the accompanying drawings, it is obvious that the invention is not restricted to them but can be modified within the inventive concept disclosed above and in the appended claims. The length and contents of the sequence, for example, may vary. In principle, a sequence of n bits may have 2ⁿ different contents. The interval at which the sequences change may also vary to a great extent. It should also be noted that the invention is applicable both to a conventional plesiochronous telecommunications network and e.g. synchronous digital telecommunications systems under development, in which the signal has a frame structure consisting of a predetermined number of bytes of fixed length and comprising a pointer indicating the phase of the payload within the frame structure. One method of transmitting condition information in a synchronous digital telecommunications system is disclosed in the copending European Patent Application No. 94909141.7 (W094/22249).

## Claims

1. A method of controlling a conditional connection in a digital telecommunications system,
said method comprising:
- transmitting (11) condition information (eb) relating to a useful signal, on the basis of which condition information said conditional connection is made at the reception end (12),
**characterised in that**
a condition bit (eb) which forms the condition information is changed in accordance with a recurrent sequence of predetermined length.

2. A method according to claim 1, **characterised in that** said recurrent sequence is formed from four successive condition bits (eb).

3. A method according to claim 1 or 2, **characterised in that** two different sequences of same length are used, said recurrent sequence to be transmitted is either the first or the second of said two different sequences and said recurrent sequence to be transmitted is changed at predetermined intervals (T).

4. A method according to claim 3, **characterised in that** the corresponding bits of the two different sequences used are inverted with respect to each other.

5. A method according to claim 3 or 4, **characterised in that** the number of ones and zeros in the two different sequences used is different.

## Patentansprüche

1. Verfahren zur Steuerung einer bedingten Verbindung in einem digitalen Telekommunikationssystem,
wobei das Verfahren umfaßt:
Senden (11) von auf ein Nutzsignal bezogener Bedingungsinformation (eb), wobei auf der Grundlage dieser Bedingungsinformation die bedingte Verbindung am Empfangsende (12) hergestellt wird,
**dadurch gekennzeichnet, daß**
ein Bedingungsbit (eb), welches die Bedingungsinformation bildet, gemäß einer wiederkehrenden Sequenz vorbestimmter Länge geändert wird.

2. Verfahren nach Anspruch 1, **dadurch gekennzeichnet, daß** die wiederkehrende Sequenz aus vier aufeinanderfolgenden Bedingungsbits (eb) gebildet ist.

3. Verfahren nach Anspruch 1 oder 2, **dadurch gekennzeichnet, daß**
zwei unterschiedliche Sequenzen gleicher Länge verwendet werden, wobei die zu sendende wiederkehrende Sequenz entweder die erste oder die zweite der zwei unterschiedlichen Sequenzen ist und die zu sendende wiederkehrende Sequenz in vorbestimmten Intervallen (T) geändert wird.

4. Verfahren nach Anspruch 3, **dadurch gekennzeichnet, daß** die entsprechenden Bits der zwei verwendeten unterschiedlichen Sequenzen mit Bezug aufeinander invertiert sind.

5. Verfahren nach Anspruch 3 oder 4, **dadurch**
**gekennzeichnet, daß**
die Anzahl der Einsen und Nullen in den zwei verwendeten unterschiedlichen Sequenzen unterschiedlich ist.

## Revendications

1. Procédé de contrôle d'un raccordement conditionnel dans un système de télécommunications numériques,
ledit procédé comprenant:
- la transmission (11) d'une information de condition (eb) se rapportant à un signal utile, sur la base de laquelle ledit raccordement conditionnel est réalisé à l'extrémité de réception (12),
**caractérisé en ce que**
un bit de condition (eb), qui forme l'information de condition, est changé selon une séquence récurrente de longueur prédéterminée.

2. Procédé selon la revendication 1,
**caractérisé en ce que** ladite séquence récurrente est formée à partir de quatre bits de condition successifs (eb).

3. Procédé selon la revendication 1 ou 2,
**caractérisée en ce que** deux séquences différentes de même longueur sont utilisées, ladite séquence récurrente à transmettre est soit la première soit la seconde desdites deux séquences différentes et ladite séquence récurrente à transmettre est changée à des intervalles prédéterminés (T).

4. Procédé selon la revendication 3,
**caractérisé en ce que** les bits correspondants de deux séquences différentes utilisées sont inversés l'un par rapport à l'autre.

5. Procédé selon la revendication 3 ou 4,
**caractérisé en ce que** le nombre de uns et de zéros dans les deux séquences différentes utilisées est différent.
